# EUROPEAN PATENT SPECIFICATION

(11) **EP 2 521 359 B1**
(45) Date of publication and mention of the grant of the patent: **08.01.2020**
(21) Application number: 11164810.1
(22) Date of filing: 04.05.2011
(51) Int. Cl.: H04N 13/122, H04N 13/15

(54) **Image cross-talk cancellation in stereoscopic video display devices**
Unterdrücken einer Bildübersprechung in stereoskopischen Videoanzeigevorrichtungen
Annulation de diaphonie d'images dans des dispositifs d'affichage vidéo stéréoscopique

(43) Date of publication of application: 07.11.2012
(73) Proprietor: C.R.S. iiMotion GmbH, 78048 Villingen (DE)
(72) Inventor: Weitbruch, Sébastien, 78048 Villingen-Schwenningen (DE); Correa, Carlos, 78048 Villingen-Schwenningen (DE); LÜBCKE, Gerold, 78048 Villingen-Schwnningen (DE)
(74) Representative: Westphal, Mussgnug & Partner Patentanwälte mbB

(56) References cited:
- EP-A1- 1 460 611
- WO-A1-2010/019922
- WO-A1-2011/016845
- WO-A1-2011/045923
- WO-A2-01/69944
- WO-A2-2006/128066
- JP-A- 8 331 600
- JP-A- 2001 054 142
- JP-A- 2001 258 052
- US-A1- 2010 271 464
- JANUSZ KONRAD ET AL: "Cancellation of Image Crosstalk in Time-Sequential Displays of Stereoscopic Video", IEEE TRANSACTIONS ON IMAGE PROCESSING, IEEE SERVICE CENTER, PISCATAWAY, NJ, US, vol. 9, no. 5, 1 May 2000 (2000-05-01), XP011025583, ISSN: 1057-7149

## Description

### Technical Field

The present Invention generally relates to display devices for reproducing stereoscopic video data, in particular to display devices employing a field-sequential method and including an image cross-talk cancellation capability for improving the quality of three-dimensional image reproduction.

### Background

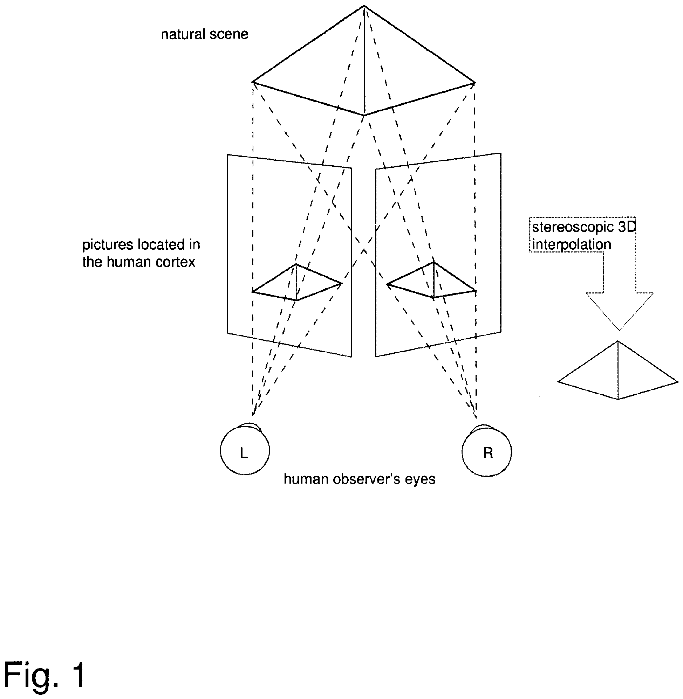

The 3D perception from the Human Visual System (HVS) is based on the close side-by-side positioning of the eyes as shown in Fig. 1. Each eye takes a view of the same area from a slightly different angle. These two separate images are sent to the brain for processing. When the two images arrive simultaneously in the back of the brain, they are united into one picture. The human mind combines the two images by matching up the similarities and adding the small differences to catch finally a three-dimensional stereo picture. With stereovision, the HVS sees an object as solid in three spatial dimensions (width, height and depth) and it is the additional perception of the depth dimension that makes stereovision so rich and special. Moreover, a stereo picture will increase the impression of sharpness in the brain.

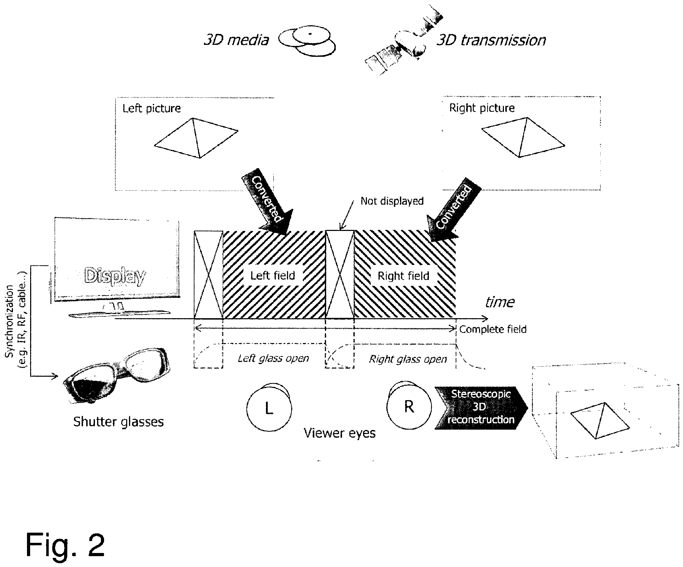

3D images are generated using two video cameras positioned side-by-side in a similar way than the human eyes. Other methods mainly based on complex software are also able to generate artificial stereo pictures by ray tracing (simulation of light propagation). In the further discussion, these images will be referred to as left and right images. If right and left images stemming from a video source are displayed in a sequential and alternating manner as shown in Fig. 2 and if a synchronized shutter system in front of the eyes allows the right image to only enter the right eye and conversely, then a three dimensional video reproduction can be observed. The shutter can be mounted in eyeglasses and is synchronized with a display in which two constituent pictures are presented in alternation instead of simultaneously. The glasses occlude either the left eye or the right eye in synchronism with the image displaying.

A simple method to implement a stereoscopic display is based on the separation of sub-fields into left (L) and right (R) groups which are synchronized with the open and close stage of the LCD shutter glasses. An advantage of such a method is the compatibility of the flat panel display (FPD) between 2D and 3D modes. This compatibility is ensured through a simple change of the display mode (single or double frame rate).

This method is often called "field-sequential" or "active-glass system" and enables to keep the full resolution of the display in 3D. Indeed, in case of polarizer systems (i.e. a passive glass system), each odd and even line is dedicated to another eye, thus reducing the displayed resolution in 3D by a factor two. Moreover, such polarizer filters are built on the front glass of the panel, thus reducing partly its brightness both in 2D as well as in 3D. Nevertheless, this field-sequential method can introduce other discomfort such as the introduction of time parallax between the two images, or the possibility of "ghosting" or cross-talk between the images due to the time response of the display (e.g. phosphor persistence in case of plasma display panels (PDPs) or grey-to-grey switching time in case of liquid crystal displays (LCDs). Most glasses-shutter systems use LCDs which work with polarized light. Currently, glasses using LCDs can provide good switching speed and reasonable extinction of the alternative lenses. The electro-optical polarizing shutters available on the market today transmit less than 30% of the unpolarized input light (rather than 50% for perfect polarizers) and this reduces the image brightness tremendously. Some eyeglass shutters are connected by wires to the monitor, others are controlled by infrared or by radio communication and are wireless.

Displaying stereo pictures on a flat panel display also requires the capability to display two different pictures per frame (i.e. doubling the frame rate) which is a new challenge for this technology.

The main problem encountered with such a solution is the problem resulting from the so-called "display response time" (also called "phosphor lag" in case of PDPs). As already mentioned, in the case of LCDs this problem is due to the slow response time of the liquid crystal when switching from a grey level to another grey level. In the case of PDPs, the phosphor elements associated with the colours red and green require too much time to switch off, and so a "shadow image" of the right image is still visible when displaying the left image and vice versa, which deteriorates the resulting stereoscopic image reproduction. This effect is often named "cross-talk" whereas this refers to the cause (i.e. incomplete separation of left and right images) or "ghost-image", which refers to the subjective perception of the images.

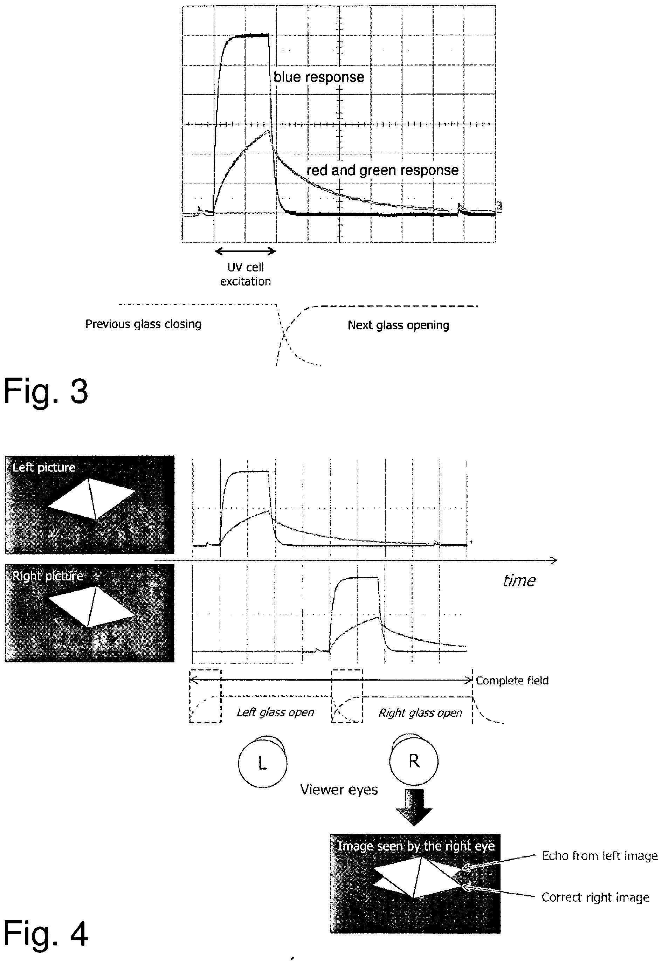

Figure 3 illustrates the response of each phosphor element to the same excitation in the case of a plasma display panel (PDP). The response time of the phosphor elements associated with the colours red and green is longer than that of the phosphor elements associated with the colour blue, which is almost equal to the primary excitation (UV light caused by the gas or plasma discharge inside the PDP cells). These long reaction times for red and green materials exceed usually the reaction time of the viewing glasses when closing and will be therefore perceived by the "wrong" eye.

For the further discussion, the assumption shall be made that the displaying of a stereoscopic image starts with the left image. An image, which is seen by the right eye (respectively left eye), will be called a right image (respectively left image).

As a result of the slowness of the red and green phosphor elements, the phosphor elements activated for the left image are still luminous while the right image is displayed or, in other words, after the opening of the right glass. Consequently, there will be a so-called "ghost image" (also denoted as "echo") visible in the right image but stemming from the left image, and on a subsequent left image an echo image stemming from the right image can be observed. This cross-talk effect is illustrated in Figure 4, which shows how subfields behave in such a configuration.

In addition to that, the energy lagging into the subsequent image (dedicated for the other eye) is energy that is missing for the correct eye. It can be seen from Figure 3 that the areas enclosed by the three curves for red, green and blue (i.e. the integral) are similar but, if the shutter glasses would have been closed in synchronism with the blue phosphor, a part of the energy from red and green materials will be lost.

However, the stereoscopic system as described above requires the left image to be seen only by the left eye, and the right image to be seen only by the right eye. However, due to the slow decay of the luminance of the green and red phosphor elements when shutting off, the right eye will receive some fraction of the luminance of the left image and conversely. The phosphor lag will prevent a proper stereoscopic effect since the right eye receives both right and left information. The echo (or cross-talk) image is usually perceived as a kind of doubled image (remaining parts of left image are superimposed to the right one and vice versa) and lead to a lack of sharpness or even to a temporal loss of the depth perception in some particular cases (e.g. in case of images with strong contrast).

The mentioned ghost images and the related image cross-talk are a problem that has to be considered when using a display technology with not-instant reaction time (such as PDPs and LCDs in field-sequential mode) for stereoscopic image reproduction. However, image cross-talk may also appear when using other video reproduction devices such as video projectors or the like, and the problems mentioned above are not limited to PDPs.

Some attempts have been made to alleviate the problem described above by pre-processing the video data before actually displaying the data. For example, the publications WO 01/69944 A2 and EP 1 460 611 A1 relate to methods for eliminating cross-talk in stereoscopic images. Thereby, an estimated echo (or ghost image) is subtracted from the current image frame so as to compensate for the echo visible in the image. However, such echo compensation gives rise to further problems in image regions where negative brightness values would occur when applying the mentioned echo subtraction. In these image regions an echo or ghost image can not be fully compensated without further measures.

### Summary

A method for processing video data comprising a sequence of successive image frames is disclosed. In accordance with one example of the invention the method comprises: receiving an image frame from a video data source; applying a brightness modification function on the image frame; compensating crosstalk in the image frame by subtracting a first ghost image, which is due to cross-talk from a preceding image frame into the current image frame, and by adding a second ghost image, which is due to cross-talk from the current image frame to a subsequent image frame. Thereby the brightness modification function includes a selective increase of low brightness values and/or a selective attenuation of high brightness values by respective offset or attenuation values so as to avoid negative brightness values and/or brightness values higher than a maximum brightness.

As mentioned, the method mentioned above ensures that no negative brightness values and no brightness values higher than a maximum brightness are generated when applying the cross-talk correction. Further the offset and attenuation values may be adaptively adjusted dependent on the actual brightness of the current image frame.

### Brief Description of the Drawings

The invention can be better understood referring to the following drawings and descriptions. In the figures like reference numerals designate corresponding parts. In the drawings:
- Fig. 1: is a diagram illustrating the principle of stereoscopic vision;
- Fig. 2: is a diagram illustrating the principle of stereoscopic image reproduction using time or field-sequential method;
- Fig. 3: is a timing diagram illustrating the time response of different phosphor elements of a PDP;
- Fig. 4: illustrates the effect of the phosphor lag when reproducing stereoscopic images using a PDP;
- Fig. 5: illustrates by means of a flow diagram one method of cross-talk cancellation by subtracting the undesired echo images;
- Fig. 6: illustrates by means of a timing diagram the effect of image cross-talk and an optimum compensation thereof;
- Fig. 7: illustrates the image cross-talk compensation according to one example of an improved compensation;
- Fig. 8: illustrates different examples of Fig. 7 by means of a flow diagram; and
- Fig. 9: illustrates different examples of brightness manipulation before cross-talk cancellation according to the present invention.

### Detailed Description

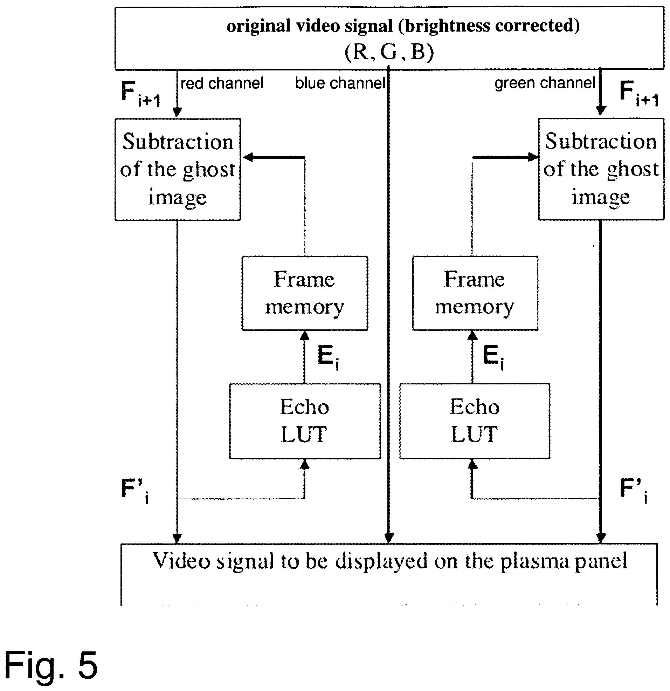

One option to avoid the image cross-talk as discussed in the introduction is to subtract an estimated echo image (or "ghost image"), which is obtained from one (e.g. left) image, from the subsequent (e.g. right) image. However, such an approach has some considerable drawbacks as does not allow for a full compensation of the echo image without deteriorating the quality of the resulting stereoscopic image. In particular a sufficient compensation of the echo image (i.e. a sufficient cross-talk cancellation) can only be achieved when the contrast of the image is reduced. Such a method is illustrated in Fig. 5, Fig. 7, and Fig. 8. Thereby, the subtraction is done regardless of the cross-talk visibility. In other words, in regions without disparity (right image = left image), subtraction will be performed even though no disturbing effect is created in these regions. This will induce an undesired global loss of brightness.

The flow diagram of Fig. 5 illustrates one exemplary method of pre-processing stereoscopic video data in order to avoid visible echo images in the images actually displayed. Accordingly, an echo image Eᵢ is estimated from one frame Fᵢ' of a video signal to be displayed. Thereby a frame represents the brightness values of the (red, blue and green) pixels composing one single left or right image. This echo estimation may be performed separately for each colour channel, whereby in applications using PDPs for 3D image presentation the blue channel may remain uncompensated. Further a look-up table (LUT) of pre-calculated data may be used for such estimation. The estimated echo image Eᵢ is stored in a frame buffer and subtracted from the subsequent frame Fᵢ₊₁ of the original video signal. In other words, one (e.g. left) frame Fᵢ' of a video signal to be displayed is obtained from the corresponding (left) frame Fᵢ of the original video signal by subtracting therefrom an echo image Eᵢ₋₁, which is estimated from the preceding (e.g. right) frame Fᵢ₋₁' (Fᵢ'=Fᵢ-Eᵢ₋₁). The subscript "i" thereby denotes a time index.

Although resulting in an improved stereoscopic image presentation, the method outlined above with respect to Fig. 5 does not achieve a full cancellation of the cross-talk induced by echo images. As a frame can only include positive brightness values, a full echo compensation can not be achieved in parts of an image that has low brightness values and where the subtraction mentioned above (Fᵢ'=Fᵢ-Eᵢ₋₁) would yield negative values. In order to circumvent this problem an offset brightness may be added to the frame. As a result, however, regions originally appearing black or almost black will then appear as grey. According to one example of the present invention the brightness is only adjusted in when the "image energy" of the non-compensable echo content in a frame is too high (i.e. when the energy of the non-compensable echo exceeds a threshold).

The cross-talk cancellation approach as outlined above tries to cancel the echo image regardless of whether the echo is actually visible in different parts of the image to be displayed. An improved method of pre-processing stereoscopic video data in order to avoid visible echo images in the images actually displayed takes into account the "visibility" of the echo image in different regions of an image frame to be displayed.

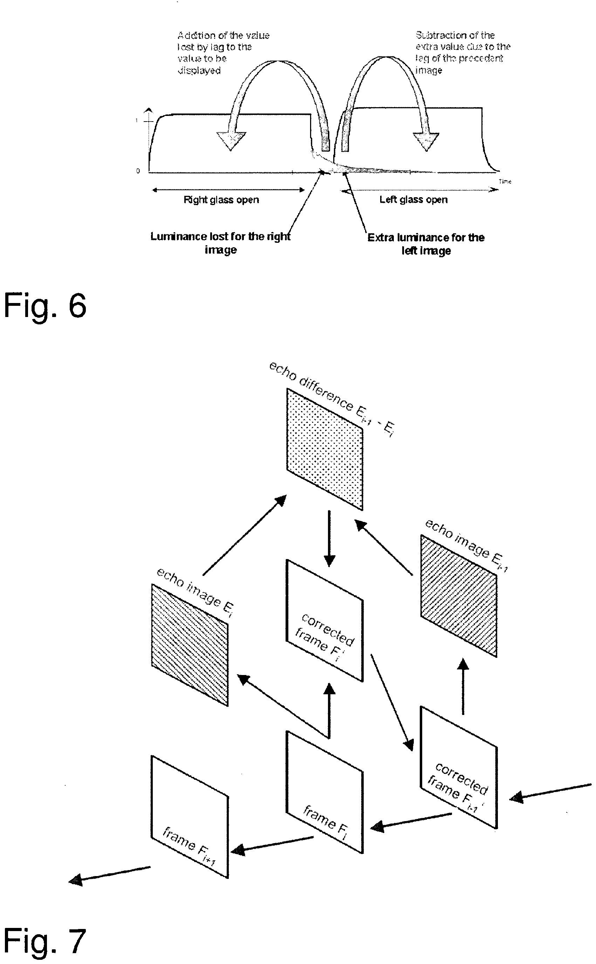

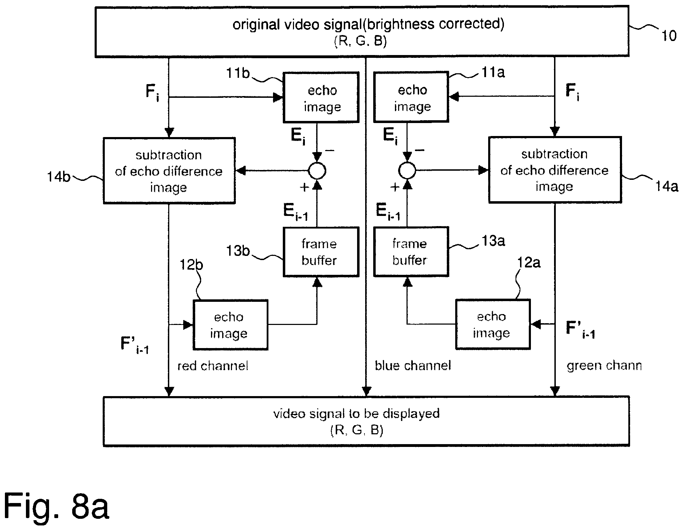

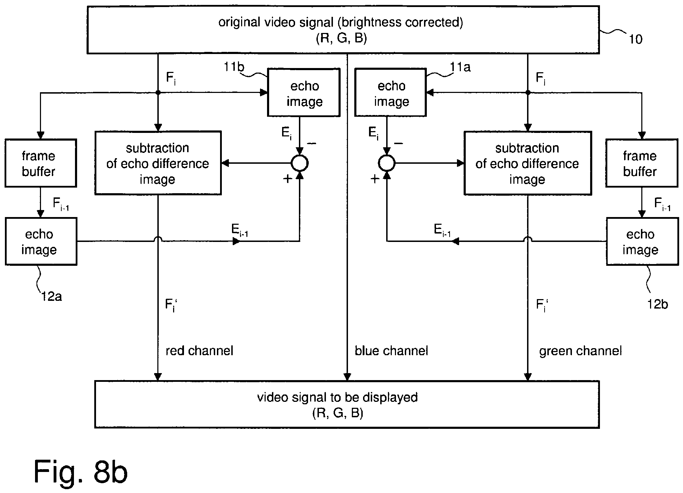

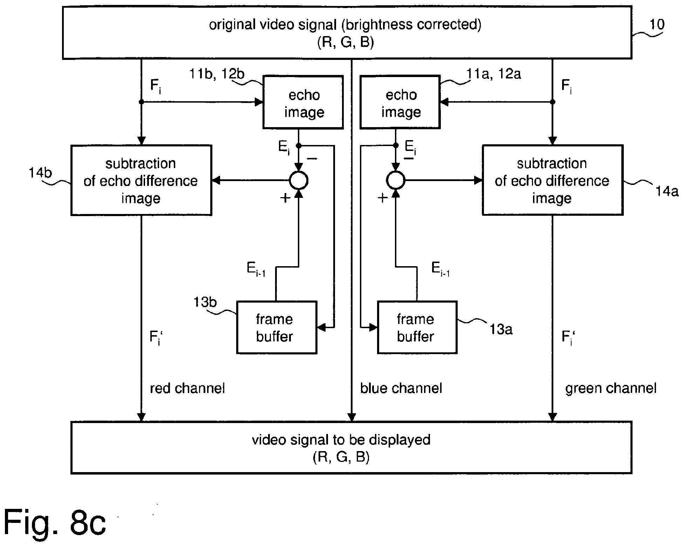

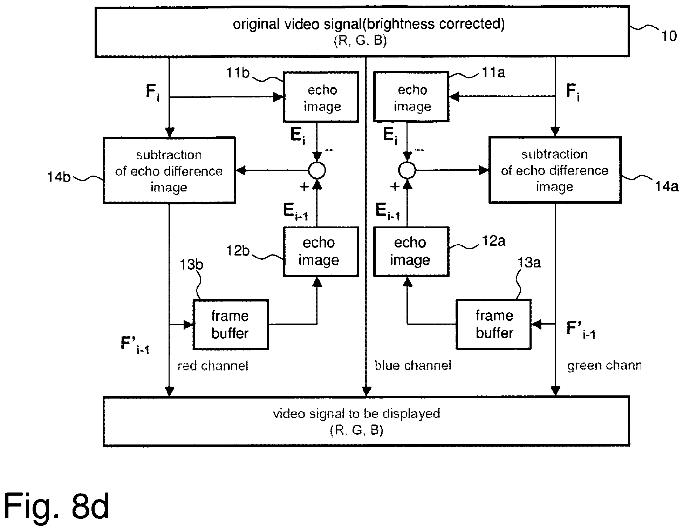

Fig. 6 illustrates an ideal cross-talk compensation that can be used more optimally with the present invention described herein. However, the present invention can be applied regardless of the cross-talk compensation solution as long as this compensation is subtracting or adding energy to whole of parts of the image according to display reaction time. Accordingly, the luminance which is "lost" in the echo image is added to a current image frame. Additionally, the extra luminance stemming from the echo of the previous image frame is subtracted from the current image frame. That is, an echo image Eᵢ₋₁ is estimated from (e.g. left) image frame Fᵢ₋₁' as previously discussed above with respect to Fig. 5. Another echo image Eᵢ is estimated from the succeeding (e.g. right) image frame Fᵢ. An echo compensated image frame Fᵢ' is calculated by adding the current echo image Eᵢ and subtracting the previous echo Eᵢ₋₁. In other words an echo compensated image frame Fᵢ' is calculated by subtracting the difference echo image Eᵢ₋₁-Eᵢ. This principle is illustrated in Figs. 7 and 8.

Figure 7 illustrates a sequence of frames Fᵢ₋₁, Fᵢ, Fᵢ₊₁ of a video stream. For the further discussion it may be assumed that frame Fᵢ₋₁ represents a left image, frame Fᵢ represents a right image and frame Fᵢ₊₁, again, represents a left image. The subscript "i" represents a time index or frame number. An echo image Eᵢ₋₁ is calculated from frame Fᵢ₋₁' (corrected in a previous step), whereby the echo image Eᵢ₋₁ represents the "ghost image" of the left image Fᵢ₋₁' appearing in the subsequent right image Fᵢ. As the echo image Eᵢ₋₁ is used for "correcting" the subsequent frame Fᵢ a frame buffer is required for storing the image data. Another echo image Eᵢ is calculated from the frame Fᵢ, whereby the echo image Eᵢ represents the "ghost image" of the right image Fᵢ appearing in the subsequent left image Fᵢ₊₁, or - in other words - the echo Eᵢ represents the luminance (or the image energy) which is "lost" in the right image Fᵢ. The corrected (i.e. echo compensated) frame Fᵢ' is obtained by subtracting the echo difference Eᵢ₋₁-Eᵢ from the current frame Fᵢ, or - in other words - the luminance resulting from the echo Eᵢ₋₁ of the preceding frame Fᵢ₋₁ is subtracted and the luminance "lost" due to the echo Eᵢ of the current frame Fᵢ is added. Following this approach for echo cancellation a high degree of echo extinction may be achieved resulting in a significantly improved stereoscopic image reproduction. The echo cancellation may be performed for each colour channel (red, green, blue) separately, whereby the blue channel does not require a correction when using PDPs. A respective flow chart illustrates the echo cancellation in Fig. 8. It should be noted that the steps of calculating the echo image (see box labelled "echo image" in Fig. 8a) may be performed before or after the buffering of the frame. That is the boxes labelled "echo-image" and "frame buffer" may be interchanged in the example of Fig. 8a (this situation is illustrated in Fig. 8d).

Generally Fig. 8a illustrates in an abstract manner a device for processing video data comprising a sequence of successive image frames Fᵢ₋₁, Fᵢ, Fᵢ₊₁. The device comprises a calculation unit 11 (labelled as 11a and 11b for the read and the green colour channel, respectively) configured to receive an image frame Fᵢ from a video data source 10 and to calculate a first echo image Eᵢ based on the image frame Fᵢ. The device further comprises a further calculation unit 12 (12a and 12b) including a frame buffer 13 (13a, 13b) for providing a second echo image Eᵢ₋₁ calculated based on a further image frame Fᵢ₋₁ preceding the image frame Fᵢ (in the example of Fig. 8a the echo image Eᵢ₋₁ is calculated using the compensated image frame Fᵢ₋₁' and is thus based on the image frame Fᵢ₋₁). An echo compensation unit 14 is configured to calculate an echo compensated image frame Fᵢ' by subtracting the difference Eᵢ₋₁-Eᵢ of the echo images Eᵢ₋₁, Eᵢ from the image frame Fᵢ. The frame buffers 13a, 13b may be coupled upstream or downstream of the further calculation units 12a, 12b.

In the present example of Fig. 8a, the second echo image Eᵢ₋₁ is calculated from the compensated image frame Fᵢ₋₁' whereas the first echo image Eᵢ is calculated from the uncompensated image frame Fᵢ. However, this is not necessarily the case, both compensated or uncompensated image frames may be used for calculating estimations of the echo images Eᵢ, Eᵢ₋₁. An alternative implementation is illustrated in Fig. 8b where both echo images are calculated directly from the current (uncompensated) image frame Fᵢ and the preceding (uncompensated) image frame Fᵢ₋₁ retrieved from a frame buffer. A third example is illustrated in Fig. 8c where, the echo image calculation units 11 and 12 are identical and the calculation has only be performed once. A forth example is illustrated in Fig. 8d which is essentially the identical to the example of Fig. 8 wherein the echo calculation and frame buffering is interchanged.

Using the above discussed novel approach for image cross-talk cancellation the echo compensation is adapted to the image content. Luminance (i.e. energy) is subtracted where "polluting" cross-talk stemming from the preceding frame superposes with the current frame, and luminance is added where the current frame is "loosing" energy without "polluting" the subsequent frame. This improves the overall quality of cross-talk cancellation, in particular at low brightness levels at which other methods experience difficulties in achieving a proper echo compensation. The improved method presented herein does not reduce image brightness of the overall image, thus increasing the margin for echo compensation in regions of low brightness levels as compared to standard approaches.

Although the method discussed above exhibits some significant improvements as compared to less sophisticated methods (see Fig. 5), a similar problem remains: compensation is not possible in image regions where the subtraction would result in negative brightness values still remains. However, using the novel cross-talk cancellation approach as discussed above the actual impact on image quality due to this effect is significantly reduced. As explained with respect of Fig. 5 negative brightness values may be avoided by adding a brightness offset (prior to echo compensation) which, however, results in black colour appearing grey. This is caused, for instance, when the value to be subtracted Eᵢ₋₁-Eᵢ is higher than the value of the current frame Fᵢ.

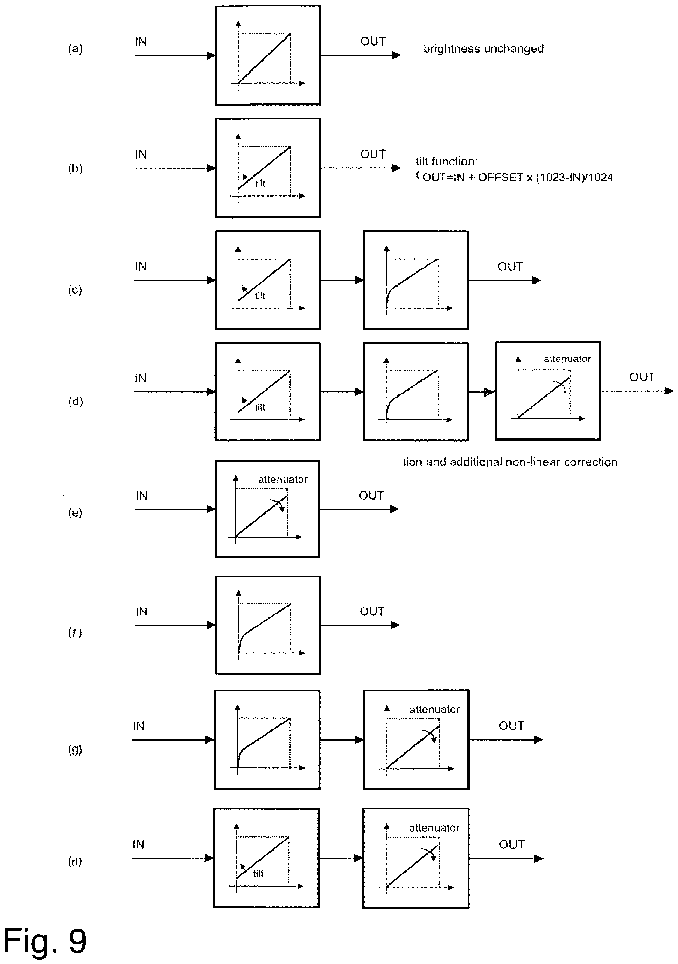

In order to alleviate this effect the brightness of a frame may be subjected to a brightness modification function called "tilt function" which allows applying a small offset to low brightness levels only when required, so as to avoid negative brightness levels after compensation. That is, the brightness modification function includes a selective increase of low brightness values and/or a selective attenuation of high brightness values by respective offset or attenuation values so as to avoid negative brightness values and/or brightness values higher than a maximum brightness (e.g. 1023 when using 10 bit words) when performing the echo compensation. Additionally, the "tilt function" may include a non-linear component which allows to apply an offset to only these brightness levels where required without shifting black regions to grey. In essence the application of such "tilt function" has a similar effect than a gamma correction. Exemplary tilt functions are illustrated in Figs. 9a-h which may be regarded as "modified gamma correction curves".

Fig. 9 illustrates the effect of the brightness modification using the tilt function mentioned above. Fig. 9a illustrates a function that has no effect and corresponds to a gamma correction with a gamma value of unity. That is, in the example of Fig. 9a an unmodified gamma correction would be performed as it is common in display devices. Fig. 9b illustrates the effect of the tilt function which adds a higher offset to low brightness values than to high brightness values. Thus the curve is "tilted" by adding the offset as compared to the linear function of Fig. 9a. In an exemplary case of a brightness resolution of 10 bits (ranges from 0 to 1023) the tilt function may be written as OUT = IN + OFFSET · ((1023-IN)/1024), whereby IN is the input brightness (ranging from 0 to 1023), OUT is the output brightness and OFFSET the offset added to a brightness of zero. Fig. 9c illustrates the case in which an additional non-linear tonality curve is included in the brightness modification. The goal of such a non-linear correction is to have a steeper growth of the luminance in dark grey areas while keeping the full black value at zero. To perform that transformation, a first grey level G₀ is selected that corresponds to the lowest grey level in the image that is not zero and where the non-linear transformation should start. Then a second grey level G₁ is selected that corresponds to the continuation of the linear region. The non-linear transformation will be applied between G₀ and G₁ only.

The computation of the levels G₀ and G₁ and the parameterisation of the transformation can be done automatically by analysing a histogram of the ghost energy per level that cannot be compensated. That is, for each (low) grey level, it can be computed how many pixels exhibit a grey level for which cross-talk cannot be compensated (because negative brightness values would occur). Thus, a histogram of the non-compensable image regions is built. This histogram can be then used to compute the values of G₀ and G₁ and also to select among several non-linear functions. The transformation will be adapted to reduce as much as possible the peaks in the histogram. An example for the non-linear transformation may be as follows: OUT = G₀ + SQRT(IN-G₀) /SQRT (G₁-G₀) · (G₁-G₀). This is only an example given to better understand the concept. However, usually, more complex transformation may be applied using a LUT (look up table) in order to get better asymptotic behaviour and smoother transitions between linear and non-linear parts of the transformation.

The actual value of OFFSET and the actual non-linearity (see Fig. 9c) may be automatically adapted depending on the actual average brightness of the current frame. Thereby, the adaptation should not be performed too fast in order to avoid disturbing variances of the overall brightness of the image. The tilt function including the non-linear component may be combined with the actual gamma correction curve yielding a modified gamma correction curve.

In accordance with a further embodiment of the present invention an automated adaptation of the offset may be used for the above-mentioned tilt function. A fixed tilt value (i.e. the offset value OFFSET being a predefined value) introduces - when permanently active - a significant decrease in the picture contrast for all images, regardless of whether these images are deteriorated by cross-talk in black area ("negative compensation") or not. This is undesired as 3D cross-talk is perceived by a human viewer only in a few extreme regions of an image. In other words, a fixed tilt value may deteriorate the contrast for all images for only improving a few images. To improve this situation the use of an "auto tilt" function is suggested where the tilt is only applied when it is necessary. An integrator evaluates on a per-frame-basis the total "ghost" energy which is the image energy that cannot be compensated, and, if a threshold value is exceeded, then tilt function is activated.

More precisely, a "tilt control" algorithm is employed according to which two energy values are calculated and evaluated once per frame and using the tilt value of the previous frame:
- EG: Ghost Energy: The ghost energy represents the luminous energy of the cross-talk present in the image area which would have a negative brightness value if full compensation would be applied (which actually can not be done in realty). In other words, the "ghost energy" is the uncompensable energy of an echo image.
- ET: Tilt Energy: The tilt energy represents the luminous energy of the image area which has a brightness value lower than the "tilt value" OFFSET.

That is, the "ghost energy" EG represents the luminous energy of the cross-talk present in that part of the image area where the effect of the echo image can not be compensated as the compensation would lead to a negative brightness value. The "tilt energy" ET represents the luminous energy of that part of the image area where the brightness level is below the "tilt value" OFFSET. These areas would therefore be strongly affected by this offset. Thus, there is a conflict of objectives between "compensating echo image effects" and "not brightening dark image regions".

An important task is to find a good compromise between those objectives, as the dark image regions, which would be compensated when applying the tilt function, as well as the dark regions where no cross-talk is visible both become brighter due to the application of the tilt function. In other words, if an image contains a lot of (nearly) black image regions (e.g. a night scene with moon) and if only a very small area with cross-talk is appearing (cross-talk around the moon in a black sky), it would be better to use a very a low tilt value OFFSET (or a tilt value of zero) so as to avoid brightening the night scene. More generally, if an image has a huge amount of black (or dark grey), it is preferable not to use an OFFSET value to keep the contrast high, as the contrast impression is an important parameter relevant for the quality of the visual perception. Accepting a small cross-talk would have a lower impact on the 3D image than fully compensating the cross-talk but brightening the image. Therefore, each energy value EG, ET is compared with two threshold values:
- "ghost energy" EG is compared with an upper threshold A and a lower threshold B;
- "tilt energy" ET is compared with an upper threshold C and a lower threshold D.

Subsequently, on a per-frame-basis a decision to increase (inc), to decrease (dec) (by an increment or, respectively, decrement value STEP), or to keep the OFFSET value is taken using these thresholds A, B, C, D. An example is given on table below:

| | EG > A | A > EG > B | B > EG |
|---|---|---|---|
| ET > C | dec OFFSET | dec OFFSET | dec OFFSET |
| C > ET > D | keep OFFSET | keep OFFSET | dec OFFSET |
| D > ET | inc OFFSET | keep OFFSET | dec OFFSET |

The above table illustrates how the tilt value OFFSET of the subsequent frame may be computed based on the estimation of the values EG and ET computed from a current frame. In a first approach the increment/decrement value STEP = 1, so that the maximum change of the tilt value OFFSET per frame is 1. However to have smoother changes and a slower regulation speed, it may be useful to use lower values (e.g. STEP=0.1 means a change of 1 every 10 frames).

The threshold values have to be fine-tuned so as to match with the display device used, depending on its resolution, the amount of cross-talk, etc. These are rather empiric values resulting from tests and experimental optimisation for each display type.

Following this concept it may be important to increase or decrease the OFFSET value by only a small amount (e.g. lower or equal 1) so as to avoid a "flashing" or "pumping" of the image.

In case of PDPs, the additive cross-talk (energy added to the next image) is usually the most critical effect which is stronger than the energy "missing" (as it is "lost" in the subsequent frame). However, when using other display technologies such as LCDs, the "missing" energy (LCDs are slow in both directions, i.e. increasing or decreasing luminance) can be equally critical as (or even worse than) the additive cross-talk.

In the latter case, the principle of using an adaptive tilt function should also be effective for the brightest (i.e. the light grey and white) regions of the image. An echo image effect may also be uncompensable when the value to be subtracted Eᵢ₋₁-Eᵢ is negative and thus the correction would yield brightness values higher than the maximum available value. For instance, if a local brightness value is 1023 in 10 bit, no energy can be added for the respective pixel and the negative cross-talk cannot be compensated in this pixel position.

Therefore a similar "tilt function" may be used having the form OUT = IN - ATTENUATION · (IN/1024) as illustrated in Figure 9d, 9e or 9g. This transformation can be combined with the previous tilt function (see Fig. 9b) or with the combination of tilt and non-linear transformation (Fig. 9c). Moreover, a similar concept to automate this correction can be applied as for the above-explained auto-tilt. In this case the value ATTENUATION can be regarded as "tilt value" which is automatically adapted in a similar way as the "tilt value" OFFSET value as explained above. Accordingly, a ghost energy (i.e. the energy representing the luminous energy of an image resulting from cross-talk whose compensation would result in brightness values higher than a maximum brightness) is calculated as well as a a tilt energy (i.e. the energy difference between the maximum possible luminous energy and the actual luminous energy of that part of the image having a brightness higher than a pre-defined brightness threshold). For each image frame, the ghost energy and the tilt energy are compared with one or more energy thresholds, and, dependent on the result of this comparison, the attenuation value ATTENUATION is increased, decreased or kept unchanged. The example explained further above with respect to the automatic adaptation of the "tilt" value OFFSET is - mutatis mutandis - also valid for the present example of automatic adaptation of the attenuation value ATTENUATION. In essence only the luminous energy scale is reversed.

Although the present invention and its advantages have been described in detail, it should be understood that various changes, substitutions, and alterations can be made herein. without departing from the scope of the invention as defined by the appended claims.

## Claims

1. A method for processing stereoscopic video data from a video data source, said stereoscopic video data comprising a sequence of successive image frames representing alternating left and right images, the method comprising:
receiving an image frame (Fᵢ) from said video data source;
applying a brightness modification function on the image frame;
compensating the cross-talk in the image frame (Fᵢ) by subtracting a first ghost image (Eᵢ₋₁), which is due to cross-talk from a preceding image frame (Fᵢ₋₁) into the current image frame (Fᵢ), and by adding a second ghost image (Eᵢ), which is due to cross-talk from the current image frame (Fᵢ) into a subsequent image frame (Fᵢ₊₁),
wherein the brightness modification function includes a selective increase of low brightness values and/or a selective attenuation of high brightness values by respective offset or attenuation values (OFFSET, ATTENUATION) so as to avoid negative brightness values and/or brightness values higher than a maximum brightness.

2. The method of claim 1, where the image frames are subject to a brightness modification function which is a linear function starting at an offset value (OFFSET).

3. The method of claim 1 or 2, where the image frames are subject to a brightness modification function which is a linear function remaining an attenuation value (ATTENUATION) below a maximum brightness value.

4. The method of one of the claims 1 to 3, where the image frames are subject to a brightness modification function which is a linear function starting at an offset value (OFFSET), and/or
where the image frames are subject to a brightness modification function which is a linear function remaining an attenuation value (ATTENUATION) below a maximum brightness value.

5. The method of one of the claims 1 to 4,
where the image frames are subject to a brightness modification function which includes a non-linear transformation which may comprise a non-linear segment between two brightness values (G₀, G₁) and linear segments below the first brightness value (G₀) and above the second brightness value (G₁),
wherein the two brightness values are calculated based on the echo image.

6. The method of one of the claims 1 to 5 wherein the brightness modification function is adapted dependent on the brightness values of the current image frame.

7. The method of claim 6 wherein the offset and/or attenuation values are adapted depending on the brightness values of the current image frame.

8. The method of one of the claims 1 to 7 wherein the image frames represent the brightness information of a red, a green or a blue colour channel.

9. The method of one of the claims 1 to 8, including
calculating a ghost energy being the energy representing the luminous energy of an image resulting from cross-talk whose compensation would result in negative brightness values;
calculating a tilt energy being the energy representing the luminous energy of that part of the image having a brightness lower than a pre-defined brightness threshold;
comparing, for each image frame, the ghost energy and the tilt energy with one or more energy thresholds; and
increasing, decreasing, or keeping the offset value dependent on the result of the comparison.

10. The method of one of the claims 1 to 9 including
calculating a ghost energy being the energy representing the luminous energy of an image resulting from cross-talk whose compensation would result in brightness values higher than a maximum brightness;
calculating a tilt energy being the energy difference between the maximum possible luminous energy and the actual luminous energy of that part of the image having a brightness higher than a pre-defined brightness threshold;
comparing, for each image frame, the ghost energy and the tilt energy with one or more energy thresholds; and
increasing, decreasing, or keeping the attenuation value dependent on the result of the comparison.

11. The method of claims 7 and 8, wherein ghost energy and tilt energy are compared with two different energy thresholds, respectively, so that the comparison is able to distinguish nine different cases.

12. The method of one of the claims 1 to 9 wherein the correction of the brightness of the image frame includes:
providing a first echo image (Eᵢ) based on the image frame (Fᵢ);
providing a second echo image (Eᵢ₋₁) based on a further image frame (Fᵢ₋₁) preceding the image frame (Fᵢ);
calculating an echo compensated image frame (Fᵢ') by subtracting the difference (Eᵢ₋₁-Eᵢ) of the echo images (Eᵢ₋₁, Eᵢ) from the image frame (Fᵢ).

13. A device adapted to process stereoscopic video data from a video data source, said stereoscopic video data comprising a sequence of successive image frames (Fᵢ₋₁, Fᵢ, Fᵢ₊₁) representing alternating left and right images; the device comprising a calculation unit (11) which is configured to
- receive an image frame (Fᵢ) from said video data source (10), to
- apply a brightness modification function on the image frame (Fᵢ), and to
- compensate the cross-talk in the image frame (Fᵢ) by subtracting a first ghost image (Eᵢ₋₁), which is due to cross-talk from a preceding image frame (Fᵢ₋₁) into the current image frame (Fᵢ), and by adding a second ghost image (Eᵢ), which is due to cross-talk from the current image frame (Fᵢ) into a subsequent image frame (Fᵢ₊₁),
wherein the brightness modification function includes a selective increase of low brightness values and/or a selective attenuation of high brightness values by respective offset or attenuation values (OFFSET, ATTENUATION) so as to avoid negative brightness values and/or brightness values higher than a maximum brightness.

14. The device of claim 13, where the image frames are subject to a brightness modification function which is a linear function starting at an offset value (OFFSET).

15. The device of claim 13 or 14, where the image frames are subject to a brightness modification function which is a linear function remaining an attenuation value (ATTENUATION) below a maximum brightness value.

## Patentansprüche

1. Verfahren zur Bearbeitung stereoskopischer Videodaten aus einer Videodatenquelle, wobei die stereoskopischen Videodaten eine Folge sukzessiver Bildrahmen aufweist, welche wechselnde Links- und Rechtsbilder darstellen, wobei das Verfahren aufweist:
Empfangen eines Bildrahmens (Fᵢ) aus der Videodatenquelle;
Anwenden einer Helligkeitsänderungsfunktion auf den Bildrahmen;
Kompensieren einer Übersprechung im Bildrahmen (Fᵢ) durch Subtrahieren eines ersten Geistesbilds (Eᵢ₋₁), das auf Übersprechung eines vorherigen Bildrahmens (Fᵢ₋₁) in den aktuellen Bildrahmen (Fᵢ) zurückzuführen ist, und durch Addieren eines zweiten Geistesbilds (Eᵢ), das auf Übersprechung des aktuellen Bildrahmens (Fᵢ) in einen darauffolgenden Bildrahmen (Fᵢ₊₁) zurückzuführen ist,
wobei die Helligkeitsänderungsfunktion eine selektive Erhöhung der niedrigen Helligkeitswerte und/oder eine selektive Dämpfung der hohen Helligkeitswerte jeweils durch Offset- oder Dämpfungswerte (OFFSET, ATTENUATION) umfasst, um negative Helligkeitswerte und/oder Helligkeitswerte, die höher als eine maximale Helligkeit sind, zu vermeiden.

2. Verfahren gemäß Anspruch 1, wobei die Bildrahmen einer Helligkeitsänderungsfunktion unterliegen, welche eine lineare Funktion ist, die mit einem Offset-Wert (OFFSET) beginnt.

3. Verfahren gemäß Anspruch 1 oder 2, wobei die Bildrahmen einer Helligkeitsänderungsfunktion unterliegen, welche eine lineare Funktion ist, die bei einem Dämpfungswert (ATTENUATION) unterhalb eines maximalen Helligkeitswerts bleibt.

4. Verfahren gemäß einem der Ansprüche 1 bis 3, wobei die Bildrahmen einer Helligkeitsänderungsfunktion unterliegen, welche eine lineare Funktion ist, die mit einem Offset-Wert (OFFSET) beginnt, und/oder
wobei die Bildrahmen einer Helligkeitsänderungsfunktion unterliegen, welche eine lineare Funktion ist, die bei einem Dämpfungswert (ATTENUATION) unterhalb eines maximalen Helligkeitswerts bleibt.

5. Verfahren gemäß einem der Ansprüche 1 bis 4,
wobei die Bildrahmen einer Helligkeitsänderungsfunktion unterliegen, welche eine nicht-lineare Transformation umfasst, die einen nicht-linearen Bereich zwischen zwei Helligkeitswerten (G₀, G₁) und lineare Bereiche unterhalb des ersten Helligkeitswerts (G₀) und oberhalb des zweiten Helligkeitswerts (G₁) umfassen kann,
wobei beide Helligkeitswerte basierend auf dem Echobild berechnet werden.

6. Verfahren gemäß einem der Ansprüche 1 bis 5, wobei die Helligkeitsänderungsfunktion abhängig von den Helligkeitswerten des aktuellen Bildrahmens angepasst wird.

7. Verfahren gemäß Anspruch 6, wobei die Offset- und/oder Dämpfungswerte abhängig von den Helligkeitswerten des aktuellen Bildrahmens angepasst werden.

8. Verfahren gemäß einem der Ansprüche 1 bis 7, wobei die Bildrahmen die Helligkeitsinformation eines rot-, grün oder blaufarbigen Kanals darstellen.

9. Verfahren gemäß einem der Ansprüche 1 bis 8, welches aufweist:
Berechnen einer Geistenergie, welche die Energie ist, welche die Lichtenergie eines aus Übersprechung entstehenden Bilds darstellt, wobei die Kompensation dieser Übersprechung zu negativen Helligkeitswerten führen würde;
Berechnen einer Kippenergie, welche die Energie ist, welche die Lichtenergie jenes Teils des Bilds darstellt, der eine Helligkeit aufweist, die niedriger als ein vordefinierter Helligkeitsschwellenwert ist;
Vergleichen, für jeden Bildrahmen, der Geistenergie und der Kippenergie mit einem oder mehreren Schwellenwerten; und
Erhöhen, Reduzieren oder Halten des Offset-Werts abhängig von dem Ergebnis des Vergleichs.

10. Verfahren gemäß einem der Ansprüche 1 bis 9, welches aufweist:
Berechnen einer Geistenergie, welche die Energie ist, welche die Lichtenergie eines aus Übersprechung entstehenden Bilds darstellt, wobei die Kompensation dieser Übersprechung zu Helligkeitswerten führen würde, die höher als eine maximale Helligkeit sind;
Berechnen einer Kippenergie, welche die Energie ist, welche den Energieunterschied zwischen der maximal möglichen Lichtenergie und der eigentlichen Lichtenergie jenes Teils des Bilds, der eine Helligkeit aufweist, welche höher als ein vordefinierter Helligkeitsschwellenwert ist, darstellt;
Vergleichen, für jeden Bildrahmen, der Geistenergie und der Kippenergie mit einem oder mehreren Schwellenwerten; und
Erhöhen, Reduzieren oder Halten des Dämpfungswerts abhängig von dem Ergebnis des Vergleichs.

11. Verfahren gemäß einem der Ansprüche 7 oder 8, wobei Geistenergie und Kippenergie jeweils mit zwei unterschiedlichen Energieschwellenwerten verglichen werden, sodass der Verglich imstande ist, neun verschiedene Fälle zu unterscheiden.

12. Verfahren nach einem der Ansprüche 1 bis 9, wobei die Korrektur der Helligkeit der Bildrahmen umfasst:
Bereitstellen eines ersten Echobildes (Eᵢ) basierend auf dem Bildrahmen (Fᵢ);
Bereitstellen eines zweiten Echobildes (Eᵢ₋₁) basierend auf einem weiteren Bildrahmen (Fi-i), der dem Bildrahmen (Fᵢ) vorausgeht;
Berechnen eines echokompensierten Bildrahmens (Fᵢ') durch Subtrahieren des Unterschieds (Ei-i-Ei) von den Echobildern (Eᵢ₋₁, Eᵢ) zu dem Bildrahmen (Fᵢ).

13. Vorrichtung zur Bearbeitung stereoskopischer Videodaten aus einer Videodatenquelle, wobei die stereoskopischen Videodaten eine Folge sukzessiver Bildrahmen (Fᵢ₋₁, Fᵢ, Fᵢ₊₁) aufweist, welche wechselnde Links- und Rechtsbilder darstellen; wobei die Vorrichtung eine Recheneinheit (11) aufweist, die dazu ausgebildet ist:
- einen Bildrahmen (Fᵢ) aus der Videodatenquelle (10) zu empfangen,
- eine Helligkeitsänderungsfunktion auf den Bildrahmen (Fᵢ) zu verwenden, und
- eine Übersprechung im Bildrahmen (Fᵢ) durch Subtrahieren eines ersten Geistesbilds (Eᵢ₋₁), das auf Übersprechung eines vorherigen Bildrahmens (Fᵢ₋₁) in den aktuellen Bildrahmen (Fᵢ) zurückzuführen ist, und durch Addieren eines zweiten Geistesbilds (Eᵢ), das auf Übersprechung des aktuellen Bildrahmens (Fᵢ) in einen darauffolgenden Bildrahmen (Fᵢ₊₁) zurückzuführen ist, zu kompensieren,
wobei die Helligkeitsänderungsfunktion eine selektive Erhöhung der niedrigen Helligkeitswerte und/oder eine selektive Dämpfung der hohen Helligkeitswerte jeweils durch Offset- oder Dämpfungswerte (OFFSET, ATTENUATION) umfasst, um negative Helligkeitswerte und/oder Helligkeitswerte, die höher als eine maximale Helligkeit sind, zu vermeiden.

14. Vorrichtung gemäß Anspruch 13, wobei die Bildrahmen einer Helligkeitsänderungsfunktion unterliegen, welche eine lineare Funktion ist, die mit einem Offset-Wert (OFFSET) beginnt.

15. Vorrichtung gemäß Anspruch 13 oder 14, wobei die Bildrahmen einer Helligkeitsänderungsfunktion unterliegen, welche eine lineare Funktion ist, die bei einem Dämpfungswert (ATTENUATION) unterhalb eines maximalen Helligkeitswerts bleibt.

## Revendications

1. Procédé de traitement de données vidéo stéréoscopiques provenant d'une source de données vidéo, les données vidéo stéréoscopiques comprenant une séquence d'images successives représentant alternativement des images gauches et droites, le procédé comprenant :
la réception d'une image (Fᵢ) provenant de la source de données vidéo ;
l'application d'une fonction de changement de luminosité à l'image ;
la compensation de la diaphonie dans l'image (Fᵢ) en soustrayant une première image fantôme (Eᵢ₋₁) due à la diaphonie d'une image précédente (Fᵢ₋₁) dans l'image actuelle (Fᵢ), et en additionnant une seconde image fantôme (Eᵢ) due à la diaphonie de l'image actuelle (Fᵢ) dans une image suivante (Fᵢ₊₁),
selon lequel la fonction de changement de luminosité comprend une augmentation sélective des valeurs de luminosité basses et/ou une atténuation sélective des valeurs de luminosité hautes par des valeurs de décalage ou d'atténuation respectives (OFFSET, ATTENUATION) de manière à éviter des valeurs de luminosité négatives et/ou des valeurs de luminosité supérieures à une luminosité maximale.

2. Procédé selon la revendication 1, selon lequel les images sont soumises à une fonction de changement de luminosité qui est une fonction linéaire commençant par une valeur de décalage (OFFSET).

3. Procédé selon l'une des revendications 1 ou 2, selon lequel les images sont soumises à une fonction de changement de luminosité qui est une fonction linéaire qui reste à une valeur d'atténuation (ATTENUATION) en-dessous d'une valeur de luminosité maximale.

4. Procédé selon l'une des revendications 1 à 3, selon lequel les images sont soumises à une fonction de changement de luminosité qui est une fonction linéaire commençant par une valeur de décalage (OFFSET), et/ou
selon lequel les images sont soumises à une fonction de changement de luminosité qui est une fonction linéaire qui reste à une valeur d'atténuation (ATTENUATION) en-dessous d'une valeur de luminosité maximale.

5. Procédé selon l'une des revendications 1 à 4,
selon lequel les images sont soumises à une fonction de changement de luminosité qui comprend une transformation non-linéaire qui peut comprendre une portion non-linéaire entre deux valeurs de luminosité (G₀, G₁) et des portions linéaires en-dessous de la première valeur de luminosité (G₀) et au-dessus de la seconde valeur de luminosité (G₁),
selon lequel les deux valeurs de luminosité sont calculées à partir de l'image écho.

6. Procédé selon l'une des revendications 1 à 5, selon lequel la fonction de changement de luminosité est adaptée en fonction des valeurs de luminosité de l'image actuelle.

7. Procédé selon la revendication 6, selon lequel les valeurs de décalage et/ou d'atténuation sont adaptées en fonction des valeurs de luminosité de l'image actuelle.

8. Procédé selon l'une des revendications 1 à 7, selon lequel les images représentent l'information de luminosité d'un canal de couleur rouge, verte ou bleue.

9. Procédé selon l'une des revendications 1 à 8, comprenant :
le calcul d'une énergie fantôme qui est l'énergie représentant l'énergie lumineuse d'une image résultant d'une diaphonie dont la compensation aboutirait à des valeurs de luminosité négatives ;
le calcul d'une énergie d'inclinaison qui est l'énergie représentant l'énergie lumineuse de la part de l'image qui a une luminosité inférieure à un seuil de luminosité prédéfini ;
la comparaison, pur chaque image, de l'énergie fantôme et de l'énergie d'inclinaison avec un ou plusieurs seuils d'énergie ; et
l'augmentation, la diminution ou le maintien de la valeur de décalage en fonction du résultat de la comparaison.

10. Procédé selon l'une des revendications 1 à 9, comprenant :
le calcul d'une énergie fantôme qui est l'énergie représentant l'énergie lumineuse d'une image résultant d'une diaphonie dont la compensation aboutirait à des valeurs de luminosité supérieures à une luminosité maximale ;
le calcul d'une énergie d'inclinaison qui est la différence d'énergie entre l'énergie lumineuse maximale possible et l'énergie lumineuse réelle de la part de l'image qui a une luminosité supérieure à un seuil de luminosité prédéfini ;
la comparaison, pur chaque image, de l'énergie fantôme et de l'énergie d'inclinaison avec un ou plusieurs seuils d'énergie ; et
l'augmentation, la diminution ou le maintien de la valeur de décalage en fonction du résultat de la comparaison.

11. Procédé selon l'une des revendications 9 ou 10, selon lequel l'énergie fantôme et l'énergie d'inclinaison sont respectivement comparées à deux seuils d'énergie différents, si bien que la comparaison est en mesure de distinguer neuf cas différents.

12. Procédé selon l'une des revendications 1 à 9, selon lequel la correction de la luminosité de l'image comprend :
le fait de fournir une première image écho (Eᵢ) basée sur l'image (Fᵢ) ;
le fait de fournir une seconde image (Eᵢ₋₁) basée sur une autre image (Fᵢ₋₁) qui précède l'image (Fᵢ) ;
le calcul d'une image à écho compensé (Fᵢ') par soustraction de la différence (Ei-i-Ei) des images écho (Eᵢ₋₁, Eᵢ) avec l'image (Fᵢ).

13. Dispositif adapté pour traiter de données vidéo stéréoscopiques provenant d'une source de données vidéo, les données vidéo stéréoscopiques comprenant une séquences d'images successives (Fᵢ₋₁, Fᵢ, Fᵢ₊₁) représentant alternativement des images gauches et droites, le dispositif comprenant :
une unité de calcul (11) conçue de manière à
recevoir une image (Fᵢ) provenant de la source de données vidéo (10),
appliquer une fonction de changement de luminosité à l'image (Fᵢ), et
compenser la diaphonie dans l'image (Fᵢ) en soustrayant une première image fantôme (Eᵢ₋₁) due à la diaphonie d'une image précédente (Fᵢ₋₁) dans l'image actuelle (Fᵢ), et en additionnant une seconde image fantôme (Eᵢ) due à la diaphonie de l'image actuelle (Fᵢ) dans une image suivante (Fᵢ₊₁),
selon lequel la fonction de changement de luminosité comprend une augmentation sélective des valeurs de luminosité basses et/ou une atténuation sélective des valeurs de luminosité hautes par des valeurs de décalage ou d'atténuation respectives (OFFSET, ATTENUATION) de manière à éviter des valeurs de luminosité négatives et/ou des valeurs de luminosité supérieures à une luminosité maximale.

14. Dispositif selon la revendication 13, selon lequel les images sont soumises à une fonction de changement de luminosité qui est une fonction linéaire commençant par une valeur de décalage (OFFSET).

15. Dispositif selon l'une des revendications 13 ou 14, selon lequel les images sont soumises à une fonction de changement de luminosité qui est une fonction linéaire qui reste à une valeur d'atténuation (ATTENUATION) en-dessous d'une valeur de luminosité maximale.
